Europäisches Patentamt

(19) European Patent Office

Office européen des brevets

(11) Publication number: **0 368 452**
**A2**

## (12) EUROPEAN PATENT APPLICATION

(21) Application number: 89309326.0

(22) Date of filing: 14.09.89

(51) Int. Cl.⁵: **C08L 95/00, C08L 23/14, C09D 195/00, B05D 7/14**

The title of the invention has been amended (Guidelines for Examination in the EPO, A-III, 7.3).

(30) Priority: 26.09.88 GB 8822529

(43) Date of publication of application:
**16.05.90 Bulletin 90/20**

(84) Designated Contracting States:
**BE DE ES FR GB IT SE**

(71) Applicant: **EXXON CHEMICAL PATENTS INC.**
**200 Park Avenue**
**Florham Park New Jersey 07932(US)**

(72) Inventor: **Jourdain, Eric Paul**
**Avenue Octave Michot 18A**
**B-1640 Rhode St. Genese(BE)**

(74) Representative: **Veldhuizen, Albert Dirk**
**Willem et al**
**Exxon Chemical Limited Exxon Chemical**
**Technology Centre PO Box 1**
**Abingdon Oxfordshire OX13 6BB(GB)**

(54) **Bituminous coating compositions.**

(57) Sprayable hot melt composition containing

(a) from 50 to 85 wt % of bitumen;

(b) from 15 to 50 wt % of a low crystallinity polymer containing units derived from butylene and propylene the percentages being calculated on the combined weight of (a) and (b);

(c) from 5 to 250 parts per hundred parts of (a) and (b) of bitumen compatible filler having a specific surface adsorption such that the average oil absorption is not higher than 4 ml per 10 g of filler;

(d) from 20 to 80 parts per hundred parts of (a) and (b) of surface adhesion promoter and optionally containing small amounts of less than 25 parts per hundred parts of (a) and (b) of low and/or high temperature plasticising agent for improving physical bulk properties.

EP 0 368 452 A2

## COATING COMPOSITIONS

Field of invention

The invention relates to coating compositions especially carbody undercoatings or underseals, methods of applying such composition and coated objects and materials produced from such compositions.

Background of invention

Car body undercoatings are applied by spraying the underbody at ambient temperature with a PVC plastisol. The treatment is part of an overall car finishing operation which includes numerous steps. Prior to plastisol application the metal is galvanised, degreased, phosphated, cataphoretically treated and baked. After plastisol application the metal is baked again, paint layers are applied and baked. For delivery a temporary acrylic coating can be applied, oil may be sprayed on the engine and a wax substance can be injected into the carbody cavities. Finally a thick wax and additional bitumen anti-gravelling layers may be sprayed on.

The overall procedure for protection the car underbody is complex and costly; the total weight of coatings (PVC plastisol and wax) is high; the disposal of PVC products may be restricted by environment protection considerations. The PVC plastisol presence constrains oven baking temperatures. The thick wax is applied in an environmentally hazardous solvent. The plastisol layer may not have lasting anticorrosion properties, may be sensitive to prolonged UV exposure and its flexibility under changing temperature and stress conditions may be unsatisfactory.

Different Patent publications disclose underseals to replace PVC-plastisols: GB 1551953 (Shell); GB 1424108 (E. Moradian); GB 1286562 (Daubert); GB 1239291, GB 1238672 (Ashland Oil); GB 1234943 (XZIT); DE 2503557 (Labofina); FR 2121552; US 3549391 (Ashland Oil). GB 1239291 in particular discloses a bituminous composition obtained by coating 1/3 by wt of inorganic filler, including talc, with a water-insoluble salt or waxy hydrocarbon soap and then adding bitumen. The composition is formed into a stable dispersion by heating or dissolving in a number of sequences. A number of optional ingredients may be added including gelling agents, petroleum sulphonates and plasticisers. The mixture is apparently to be sprayed at ambient temperatures and has to undergo a drying process after application. WO-83/03838 (Ford) discloses a sprayable hot melt corrosion preventative composition containing epoxy resin elastomer adduct; a micro-crystalline wax and a dispersion of petroleum sulfosate complex in a non-volatile diluent oil. Fillers may be added.

It is an aim of the invention to provide a composition for car body undersealing which can be applied in molten form through spraying, which has characteristics desirable for underseals and/or which permits simplification of the overall coating operation during car manufacture.

Summary of invention

The invention provides sprayable hot melt composition containing
(a) from 50 to 85 wt % of bitumen;
(b) from 15 to 50 wt % of a low crystallinity polymer containing units derived from butylene and propylene, the percentages being calculated on the combined weight of (a) + (b);
(c) from 5 to 250 parts per hundred parts of (a) and (b) of bitumen compatible filler having a specific surface adsorption such that the average oil absorption is not higher than 4 ml per 10 g of filler;
(d) from 20 to 80 parts per hundred parts of (a) and (b) or surface adhesion promoter and optionally containing small amounts of less than 25 parts per hundred parts of (a) and (b) of low and/or high temperature plasticising agent for improving physical bulk properties.

Preferably (a) is from 70 to 80 wt % (b) is from 20 to 30 %; (c) is less than 100 parts especially less than 50 parts; (d) is from 25 to 35 parts with additionally 10 to 20 parts overall of low and high temperature plasticizers agent. The amount of filler selected is influenced by the desired application viscosity; smaller amounts can be used at finer particle sizes.

The butylene/propylene combines with the filler, bitumen and surface adhesion promotor to provide an adhesive spray with anticorrosive and sound deadening properties. The plasticiser promotes bulk physical properties so that high temperature spraying is possible and flexibility remains when the coating has cooled.

The filler also serves to promote melt strength in the interval between spraying and cooling and keeps the melting point above the paint oven temperature. The composition has a high dry content and preferably is devoid of solvent and it can act to provide water tightness at steel panel junctions in thickness of from 500 to 2000 micron. This may assist in sound deadening. The overall car coating method can be simplified because PVC plastisol baking, thick wax spray and additional bitumen antigravelling treatments may become unnecessary.

The proportion of the components of the composition can be varied in accordance with requirements. The bitumen provides anticorrosive properties and must be evenly distributed in a blend with the polymer which combines a high melting point (to elevate the melting point of the overall blend above that of the paint oven temperature) with highly amorphous characteristics (for low temperature flexibility). The proportion of filler may be reduced for lower paint baking temperatures if required.

A key ingredient is the polymer which combines a high melting point with a low $T_G$ due to an elastoplast nature which also gives resilience at low temperature and some tackiness when molten. Suitably the polymer is substantially amorphous, has a crystallinity of at least 4 wt %, a melt viscosity at 190°C of no more than 10 000 mPa.s, a ring and ball softening point greater than 145°C and/or a Fraass point of less than -25°C. Preferably the bitumen has a ring and ball softening point greater than 120°C and/or has a Fraass point of less than -20°C.

The surface adhesion modifier may be C5 or C9 petroleum resin, coumarone indene, pre-alkylated phenolic resin (whether modified or not), resin ester or polyterpene. Advantageously the surface adhesion promotor is a tackifier of a coumarone or a hydrocarbon resin oligomer preferably having a ring and ball softening point of at least 90°C. The tackifier is used in amounts as will give the necessary hot tack, but is not used in excess to avoid lowering the softening point unduly.

The filler may be calcium carbonate, preferably being a mixture of different particle sizes. Some thixotropic filler (precipitated silica or bentonite) may be used also.

The plasticising agents for improving bulk properties may include the following.

Conveniently there is provided additionally from 4 to 7 parts of a low temperature plasticiser, preferably having a drying effect, preferably having a plasticising effect at 50°C or less and/or preferably soya bean fatty acid. Additionally there may be provided up to 3 parts preferably from 1 to 2.5 wt parts of a high temperature plasticiser, preferably a polyethylene wax, normally solid at room temperatures, preferably having an Mn of suitably of less than 2000 suitably of from 1000 to 1400, preferably having a Brookfield viscosity at 121°C of less than 50 mPa.s and/or preferably having a ring and ball softening point of at least 105°C.

The high temperature plasticising agents pay also include polybutene (Sold under the trade mark "Parapol") having a Mw of from 800 to 2500 and a viscosity of around 20 mPa.s and a density of 0.89; or low molecular weight ethylene-vinylacetate copolymer or terpolymer suitably with an MI (ASTM D 1238, 190°C, 2.1 Kg) of 1000 to 6000 preferably around 2500 g/10 min. and a softening point of 85°C. Suitably these polymeric plasticising agents are used in amounts balanced with the surface adhesion promotors to provide the desired balance of cold bending, adhesion and flow rate; whilst using little or no wax-like materials.

Preferably the composition overall is formulated so as to provide a ring and ball softening point of from 130° to 150°C, a Danielsag of no more than 1 at a temperature of 130°C, a Brookfield viscosity of no more than 100 000 cPs at 180°C, most suitably from 40 000 to 80 000 and a Fraass point over -20°C.

The composition has to be applied with equipment suitable for providing proper formation of the hot, molten spray particles. Suitably the method includes the steps of:

(1) heating the composition to be sprayed to from 170 to 195°C;

(2) pumping the molten composition at a pressure of at least 200 bar;

(3) spraying the pressurized composition onto a metal surface, preferably warm, to improve adhesion;

(4) allowing the coating and metal to cool. Details of suitable spraying arrangements are described in the Examples.

Example 1

The following components were blended in proportions shown in Table 1:

1) Oxidized bitumen - type 125/30 from Esso.

| Specifications: | |
| --- | --- |
| Softening point Ring & Ball, °C: | 120-130 |
| Penetration: 0°C, 200 g, 60 s, 1/10 mm: | >20 |
| 25°C, 100 g, 5 s, 1/10 mm: | 25-35 |
| 46°C, 50 g, 5 s, 1/10 mm: | <55 |
| Flame resistance V.O. Cleveland, °C: | >240 |
| Solubility in $CS_2$, %: | >99.6 |
| Density at 25°C: | >0.99 |
| Fraass point, °C: | <-20 |

2) Ethylene/Propylene copolymer [Hüls Vestoplast 608) It is a olefin copolymer of $C_4$ and some $C_3$ manufactured by low pressure process.

| Specifications: | |
| --- | --- |
| Melt viscosity at 190°C, mPa.s: | 8000 |
| Softening point Ring & Ball, °C: | 155 |
| Penetration 25°C, 100 g, 5 s, 1/10 mm: | 18 |
| Fraass point, °C: | -30°C |

3) Low temperature plasticiser/drying agent soya bean fatty acid

4) High temperature plasticiser Escomer H 101 from Exxon Chemical. It is a polyethylene wax manufactured by the low pressure process.

| Specifications: | |
| --- | --- |
| Brookfield viscosity at 121°C, mPa.s: | 27 |
| Softening point Ring & Ball, °C: | 112°C |
| Penetration 25°C, 100 g, 5 s (dmm): | 3 |
| Density: | 0.95 |

5) Tackifier Escorez 1401 or 2203 from Exxon Chemical. It is a synthetic resin based on hydrocarbon oligomers produced from a petroleum feed of a steam cracker.

| Specifications: | |
| --- | --- |
| Softening point Ring & Ball, °C: | 115°C |
| Viscosity at 160°C, mPa.s: | 4000 |
| Specific gravity: | 0.97 |

6) Filler in the form of a combination of white fillers:
Omva Durcal, calcium carbonate with an average particule diameter of 30 micron (type 40) or 60 micron (type 65) and a density of 2.75.
Omva Violette (or BSH), calcium carbonate with an average particule diameter of 2.5 micron and a density of 2.7.
Rhone Poulenc Thixosil 33J, precipitated silica with an average particule diameter of 14-22 n.m and specific surface BET of 250 $m^2/g$.
The composition of the white filler content can be broken down as follows :
- Thixosil 33J is in the range of 3.5 to 5 %
- Durcal 65 and Omya violette (or BSH) in a respective amount from 50/50 to 65/35.
White fillers combination has a specific surface with an oil absorption between 3 and 4 ml/100 g.

TABLE 1

| Parts by weight | | | | |
|---|---|---|---|---|
| Oxidized bitumen | 22 (71%) | 27 (73%) | 31 (76%) | 37 (77%) |
| Copolymer | 9 (29%) | 10 (27%) | 10 (24%) | 11 (23%) |
| Filler | 60 (193) | 52 (140) | 46 (112) | 37 (77) |
| Tackifier | 9 (29) | 11 (30) | 13 (32) | 15 (31) |
| Soya bean fatty acid | 4 (13) | 4 (11) | 4 ( 8) | 4 ( 8) |
| H101 | 2 (6.55) | 2 (5.5) | 2 ( 4) | 2 ( 4) |
| Softening point $^\circ$C | 144 | 140 | 137 | 130 |
| Sagging Daniel ˟ | 0 | 0 | 0 | 1 |
| Cold flexibility $^\circ$C˟ | -20 | -20 | -25 | -30 |

˟ determined by bending coated metal at low temperatures and detecting any cracks or delamination in the coating. The temperature given is the lowest temperature at which no cracks or delamination were observed.
˟ determined by heating, for 7 days at 130 $^\circ$C, a body of the blend and of Daniel sag corresponds approximately to 3 mm of sideways material of a body 14 cm high, 12 cm long 3 cm wide and curved to be 18 mm wide.

Depending mainly on the proportion of filler, a composition containing substantial amounts of anti-corrosion bitumen can be applied by spraying as a melt for adhering to a metal substrate and withstanding subsequent baking treatments whilst providing a thick, flexible coating suitable for car underbody protection. There is no corrosion of a steel plate after 7 days in water à 55 $^\circ$C covered by the product and cross scratched and no delamination of the composition. Preferably the metal has to be prewarmed at 60 $^\circ$ to 80 $^\circ$C to ensure a better adhesion.

Example 2

Similarly components were blended in an L4 Taguchi mixer as shown in Table 2 :

5

## TABLE 2

| INGREDIENT | COMPOUND | | | |
|---|---|---|---|---|
| Omya Durcal 40 | - | | 18 | |
| Omya Violette | 8 | (28) | 18 | (125) |
| Thixosil 333 | 5 | | 4 | |
| Oxidised Bitumen | 46 | (73%) | 32 | (80%) |
| Soya been fatty acid | 6 | | 4 | |
| Copolymer | 17 | (27%) | 8 | (20%) |
| Escorez 1401 | 9 | | 8 | |
| Parapol 950 | 7 | (38) | 7 | (50) |
| EVA MV 025 14 | 2 | | 1 | |
| SOFTENING POINT (ASTM D 36), °C | 131 | | 112 | |
| BROOKFIELD VISCO (ASTM D 2983) AT 190°C | | | | |
| Viscometer : RVT 46 231, spindle 27, | | | | |
| Speed : 10 rpm mPa.s | 4500 | | 7250 | |
| SAGGING AT 130°C, 1 HOUR, DANIEL UNITS | 0 | | 1 | |
| COLD FLEX TEST | | | | |
| DELAMINATION TEMPERATURE, °C | -30 | | -30 | |

The ingredients are the same as in Example 1 except :

7) Parapol 950 and EVA MV 02514 are the high temperature plasticisers. Parapol 950 is a polybutene having an MW of 950 with a Brookfield viscosity of 20 mPa.s at 175°C and density of 0.89.

8) EVA MV 02514 has an MI of 2500 9/10 min (ASTM 01238, 190° under 2.1 Kg), VA content of 14 wt% and ring and ball softening point of 85°C. The first (left most column) product of Table 2 provides a high softening point with low application viscosity, low sag at 130°C and a low delamination temperature as determined by a cold flextest.

Bracketed figures in both Tables show the wt percentage or parts per hundred values for comparison with claimed ranges.

The composition is suitably applied using equipment in which a heated plate lies on the surface of the composition in a container such as a barrel. The plate hence melts the upper layer only. An epicycloidal pump pressurises the fluid and propels it, through heated or heat-insulated piping or hose to a nozzle. Air is supplied to the nozzle under pressure to break up the melt into a fine spray. The plate descends into the container as the composition is consumed. Such equipment is available Nordson Corporation and Rexson.

**Claims**

6

1. Sprayable hot melt composition containing

(a) from 50 to 85 wt % of bitumen;

(b) from 15 to 50 wt % of a low crystallinity polymer containing units derived from butylene and propylene the percentages being calculated on the combined weight of (a) and (b);

(c) from 5 to 250 parts per hundred parts of (a) and (b) of bitumen compatible filler having a specific surface adsorption such that the average oil absorption is not higher than 4 ml per 10 g of filler;

(d) from 20 to 80 parts per hundred parts of (a) and (b) of surface adhesion promoter and optionally containing small amounts of less than 25 parts per hundred parts of (a) and (b) of low and/or high temperature plasticising agent for improving physical bulk properties.

2. Claim according to claim 1 in which the bitumen (which is preferably oxidized bitumen) has a ring and ball softening point greater than $120^{\circ}$ C and/or has a Fraass point of less than $-20^{\circ}$ C and/or is present in an amount of less than 100 parts, preferably less than 50 parts.

3. Claim according to claim 1 or claim 2 in which the polymer is substantially amorphous, has a crystallinity of at least 4 wt % , a melt viscosity at $190^{\circ}$ C of no more than 10 000 mPa.s, a ring and ball softening point greater than $145^{\circ}$ C and/or a Fraass point of less than $-25^{\circ}$ C.

4. Claim according to any of the preceding claims in which the surface adhesion promoter is a hydrocarbon resin oligomer or coumarone preferably having a ring and ball softening point of at least $90^{\circ}$ C.

5. Claim according to any of the preceding claims in which the filler is calcium carbonate, preferably being a mixture of different particle sizes.

6. Claim according to any of the preceding claims in which there is provided from 4 to 7 parts per hundred parts of (a) and (b) of a low temperature plasticiser, preferably having a drying effect, preferably having a plasticising effect at $50^{\circ}$ C or less and/or preferably soya bean fatty acid.

7. Claim according to any of the preceding claims in which there is provided up to 3 parts per hundred parts of (a) and (b), preferably from 1 to 2.5 parts of a high temperature plasticiser, preferably a polyethylene wax, normally solid at room temperatures, preferably having an Mn of less than 2000, preferably having a Brookfield viscosity at $121^{\circ}$ C of less than 50 mPa.s and/or preferably having a ring and ball softening point of at least $105^{\circ}$ C.

8. Claim according to any of the preceding claims formulated so as to provide a ring and ball softening point of from 1300 to $150^{\circ}$, a Daniel sag of no more than 1 at a temperature of $130^{\circ}$ C, a Brookfield viscosity of no more than 100 000 cPs preferably from 300 to 10 000 cPs and a Fraass point of over $-20^{\circ}$ C.

9. A method of applying a composition according to any of the preceding claims including the steps of:

(1) heating the composition to from 170 to $195^{\circ}$ C;

(2) pumping the molten composition at a pressure of at least 200 bar;

(3) spraying the pressurized composition onto a metal surface;

(4) allowing the coating and metal to cool.

10. Coated metal containing a layer of sprayable hot melt composition containing

(a) from 50 to 85 wt % of bitumen on the basis of (a + b);

(b) from 15 to 50 wt % of butylene-propylene derived polymer on the basis of (a + b);

(c) from 70 to 250 parts of filler per hundred parts of (a + b); and

(d) from 20 to 50 parts of a surface adhesion promoter per hundred parts of (a + b) and optionally

(e) less than 25 parts of low and/or high temperature plasticising agent per hundred parts of (a + b).

11. Sprayable hot melt composition containing

(a) from 50 to 85 wt % of bitumen;

(b) from 15 to 50 wt % of a low crystallinity polymer containing units derived from butylene and propylene;

(c) from 70 to 250 wt % of bitumen compatible filler having a specific surface adsorption such that the average oil absorption is not higher than 4 ml per 10 g of filler;

(d) from 20 to 50 wt % of tackifier and optionally containing small amounts of less than 25 wt % overall of low and/or high temperature plasticising agent, all percentages being calculated on the combined weight of (a) and (b).